Europäisches Patentamt

European Patent Office

Office européen des brevets

(19)

(11) Numéro de publication: **0 003 188**

**A1**

(12) **DEMANDE DE BREVET EUROPEEN**

(21) Numéro de dépôt: 79400002.6

(22) Date de dépôt: 04.01.79

(51) Int. Cl.²: **F 23 N 1/02**
//F23N5/18, F23N5/24,
F16K31/08, H01H35/26,
H01H35/34

(30) Priorité: 11.01.78 FR 7800623
20.04.78 FR 7811651

(43) Date de publication de la demande:
25.07.79 Bulletin 79/15

(84) Etats contractants désignés:
BE DE GB IT NL

(71) Demandeur: SAUNIER DUVAL - Société Anonyme
250, route de l'Empereur
F-92508 Rueil Malmaison(FR)

(72) Inventeur: Zweguintzoff, Michel
97/125, avenue Salengro
F-92290 Chatenay Malabry(FR)

(74) Mandataire: Lhuillier, René
6, rue Lavoisier
F-93107 Montreuil Cédex(FR)

(54) Manocontact à différentielle réglable pour système de contrôle et de sécurité du débit d'air nécessaire à la combustion d'un brûleur à gaz.

(57) L'invention concerne un manocontact.

On dispose verticalement dans la chambre haute-pression (2) un boîtier 4 du manocontact, un cylindre métallique 10 renfermant un petit barreau aimanté 13 ainsi soustrait à l'influence des champs extérieurs, et l'on fait en sorte que ce cylindre débouche à quelque distance d'une armature métallique 15 portée par la membrane 3 de telle sorte que celle-ci en position arrêt de l'interrupteur 9, reste collée contre l'armature, et qu'une certaine dépression s'exerçant sur la membrane soit nécessaire pour la décoller.

Application aux systèmes de contrôle et de sécurité du débit d'air nécessaire à la combustion d'un brûleur à gaz.

EP 0 003 188 A1

0003188

## Manocontact à différentielle réglable pour système de contrôle et de sécurité du débit d'air nécessaire à la combustion d'un brûleur à gaz.

L'invention qui se rapporte à un système de sécurité et de contrôle du débit d'air nécessaire à la combustion d'un brûleur à gaz plus particulièrement pour les chaudières du type étanche à tirage forcé, concerne plus précisément un manocontact à différentielle réglable.

Dans ce type d'appareil on sait que l'utilisation d'un moyen mécanique du genre ventilateur pour assurer l'entrainement de l'air nécessaire à la combustion oblige à prévoir un dispositif de sécurité qui subordonne l'admission du gaz au brûleur au fonctionnement normal dudit ventilateur, c'est-à-dire à l'apparition du débit d'air nécessaire à cette combustion.

Un de ces dispositifs de sécurité largement utilisé est le manocontact à pression différentielle constitué d'une membrane d'assez grand diamètre séparant un boîtier en deux chambres dont l'une est raccordée à la pression amont d'un venturi, ce dernier étant sur le conduit d'air du ventilateur. Le déplacement de la membrane agit sur un interrupteur électrique qui commande une électrovalve d'admission du gaz aux brûleurs.

En position de fonctionnement de l'appareil, la membrane maintient l'interrupteur ouvert par exemple par l'intermédiaire d'un levier rappelé par un ressort. Dès qu'il y a diminution du débit d'air en deçà d'un seuil prédéterminé, et par conséquent de la différentielle de pression sur la membrane, celle-ci se déplace, sous l'effet conjugué du ressort de rappel et de la force intrinsèque de rappel de l'interrupteur lui-même, jusqu'à la fermeture de l'interrupteur et de l'électrovalve gaz. C'est bien le but recherché mais on a constaté avec ces manocontacts des inconvénients se caractérisant par un pompage ou des battements de

0003188

ladite membrane, ce qui entraine une succession rapide d'ouvertures et de fermetures du gaz au brûleur, avec tous les inconvénients qui en découlent.

Ce phénomène est dû au fait d'une part qu'il est très difficile de régler la différentielle de pression sur la membrane et d'autre part que l'arrêt du brûleur provoqué par la diminution du débit d'air se traduit aussitôt par un accroissement de dépression au col du venturi qui réenclenche l'interrupteur électrique un court instant, et ainsi de suite.

Il convient donc pour éviter ce phénomène, de faire en sorte qu'une différence de pression relativement importante soit nécessaire pour déplacer la membrane de la position correspondante à l'arrêt de l'appareil, vers la position fonctionnement, et que par contre une différence de pression relativement faible soit suffisante pour maintenir ladite membrane en position d'ouverture.

C'est un des mérites de l'invention d'avoir résolu ce problème grâce à un système simple et de faible prix de revient, qui est en outre facilement adaptable aux dispositifs existants.

Suivant l'invention, on dispose verticalement dans la chambre haute-pression du boîtier du manocontact, un cylindre métallique renfermant un petit barreau aimanté ainsi soustrait à l'influence des champs extérieurs, et l'on fait en sorte que ce cylindre débouche à quelque distance d'une armature métallique portée par la chambre. Ainsi quand la membrane est en position d'arrêt de l'interrupteur, elle est collée contre l'armature et il faut une certaine dépression au venturi pour la décoller tandis qu'une faible pression suffit pour la maintenir dans la position où elle ouvre l'interrupteur.

Suivant une caractéristique particulière de l'invention, le cylindre métallique renfermant le petit barreau aimanté est vissé dans un orifice fileté prévu à la partie inférieure du boîtier du manocontact de façon à pouvoir régler la distance entre l'armature métallique portée par la membrane et ledit cylindre en fonction de la stabilité de l'interrupteur. Grâce à cette caractéristique on peut régler, suivant la sensibilité de l'interrupteur utilisé, l'écartement entre la membrane et la tête du cylindre.

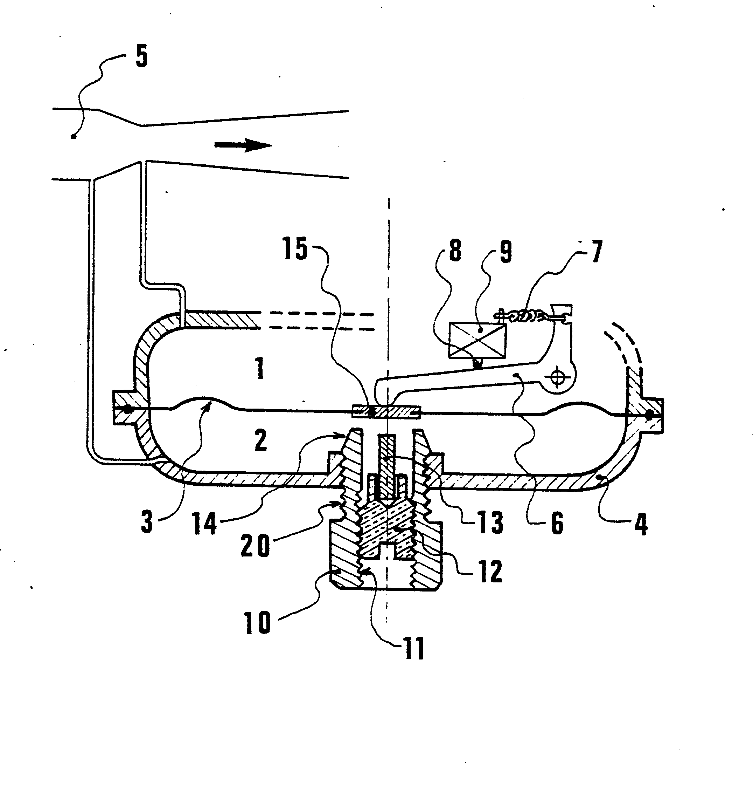

L'invention est exposée plus en détail dans la description qui va suivre d'une forme de réalisation en référence au dessin annexé qui représente une vue en coupe du manocontact.

Les chambres (1) et (2) délimitées par la membrane 3 souple, pincée entre les bords d'un boîtier 4 à double coquille, sont respectivement raccordées au col d'un venturi 5 à sa partie amont de telle sorte que l'apparition d'un débit d'air dans le conduit du venturi entraine de façon connue la levée de la membrane 3. Celle-ci agit sur un levier pivotant 6 rappelé par un ressort 7 dont le bras agit sur le poussoir 8 d'un interrupteur électrique 9.

Dans un orifice prévu à la partie inférieure du boîtier 4 est engagé un bouchon creux en forme de cylindre 10 en acier doux dont la partie inférieure porte un filetage 11. Le bouchon creux 10 porte aussi un filetage extérieur 20 qui permet de le visser dans l'orifice du boîtier 4. Selon une variante il pourrait être enmanché en force dans ledit orifice. Dans le puits cylindrique ainsi réalisé est engagée une vis 12 dont la partie supérieure évidée sert de logement à un petit barreau débordant assez largement de la vis. Cette dernière est positionnée par vissage dans le cylindre fileté 10 de telle sorte que l'extrémité supérieure du barreau avantageusement de forme cylindrique ainsi monté coaxialement au puits en acier doux ne dépasse pas la couronne supérieure 14 du cylindre 10. Pour limiter le débattement en hauteur de la vis le filetage 11 est interrompu à un niveau déterminé. La membrane porte enfin en son centre une coupelle en acier 15 d'une dimension correspondant à la couronne 14.

Quand l'appareil ne fonctionne pas et quand par conséquent il y a arrêt ou diminution du débit d'air au ventilateur, la membrane est en position repos c'est-à-dire en position basse et la coupelle 15 est appliquée contre la partie supérieure du cylindre 10. La membrane est ainsi maintenue par le champ magnétique du barreau 13 dont les lignes de force sont canalisées par le cylindre. L'ensemble est ainsi soustrait à l'influence des champs extérieurs et les risques de désaimantation du barreau sont éliminés.

Quand l'appareil est en fonctionnement normal la différentielle des pressions entre les chambres (1) et (2) provoquée par le venturi 5 s'applique sur la membrane 3 dans le sens d'un décollement de celle-ci du champ d'attraction du barreau aimanté. Il s'ensuit le pivotement du levier 6 et l'actionnement de l'interrupteur électrique 9 par son poussoir 8 (cas de la figure). On notera qu'il faut donc une différence de pression relativement importante pour déplacer la membrane de la position correspondant à l'arrêt de l'appareil vers la position fonctionnement. Par contre une fois que la membrane est en position haute (fonctionnement), il suffit d'une faible différentielle de pression pour l'y maintenir.

Mais s'il y a diminution du débit d'air au venturi en deçà d'un seuil prédéterminé, et donc diminution plus importante de la différentielle de pression sur la membrane, celle-ci tend à atteindre sa position repos sous l'effet conjugué de la force de rappel du ressort 7 ainsi que la faible force de rappel du poussoir 8 lui-même.

Dès que la membrane 3 s'est approchée du cylindre 10 et que la coupelle 15 a ainsi atteint la zone soumise au champ d'attraction du barreau 13, elle s'applique aussitôt contre la tête du cylindre 10. La fermeture de l'interrupteur électrique 9 est donc franche ; à partir de cette position il faut à nouveau une différence de pression relativement importante pour un nouvel enclenchemen de l'interrupteur par levée de la membrane. Ce système évite donc la succession rapide d'enclenchement et de déclenchement de l'interrupteur due au pompage ou aux battements de la membrane.

Les deux filetages 11 et 20 prévus à l'intérieur et à l'extérieur du cylindre 10 permettent de régler d'une part la force d'attraction de la membrane 3 en agissant par l'intermédiaire de la vis 12 sur Ta hauteur du barreau 13 par rapport à la couronne supérieure 14 et d'autre part la distance entre la membrane 3 et la couronne supérieure 14 du cylindre 10 en fonction de la sensibilité de l'interrupteur 9 de telle manière que la fermeture dudit interrupteur se produise quand la membrane 3 s'approche du cylindre 10 et que la coupelle 15 ainsi soumise au champ d'attraction du barreau 13 s'applique contre la tête du cylindre 10.

Par conséquent, suivant la sensibilité de l'interrupteur utilisé, on règle l'écartement entre la membrane et la tête du cylindre afin que la fermeture de l'interrupteur se produise dès que la membrane se trouve dans la zone d'attraction du barreau aimanté 13.

De plus, après ce préréglage on peut obturer le puits inférieur au-dessous de la vis par une cire ou un produit analogue qui a le mérite de parfaire l'étanchéité du boîtier et de bloquer la vis dans la position prévue, la rendant invisible pour l'usager et donc pouvant protéger le préréglage effectué.

L'invention n'est pas limitée à l'exemple de réalisation décrit mais en englobe également toutes les variantes constructives.

R E V E N D I C A T I O N S

-=-=-=-*-=-=-=-=-=-=-=-=-

1°) - Manocontact à différentielle réglable pour système de contrôle et de sécurité du débit d'air nécessaire à la combustion d'un brûleur à gaz comportant une membrane 3 soumise à une différentielle de pression provoquée par ce débit d'air et qui agit sur un interrupteur 9 de commande d'admission du gaz au brûleur, caractérisé par le fait qu'un cylindre métallique 10 renfermant un petit barreau aimanté 13 est disposé verticalement dans la chambre haute-pression (2) et débouche à proximité d'une armature métallique 15 portée par la membrane 3.

2°) - Manocontact selon la revendication 1 caractérisé par le fait que le barreau aimanté 13 est monté verticalement sur une vis réglable·en hauteur à l'intérieur du cylindre 10.

3°) - Manocontact selon les revendications 1 et 2 caractérisé par le fait que le sommet du barreau aimanté 13 atteint au maximum la couronne supérieure 14 du cylindre 10.

4°) - Manocontact selon les revendications 1 et 2 caractérisé par le fait que le cylindre 10 est un bouchon creux emmanché en force à la partie inférieure du boîtier 4.

5°) - Manocontact selon les revendications 1 et 2 caractérisé par le fait que le cylindre 10 est un bouchon creux vissé dans un orifice fileté prévu à la partie inférieure du boîtier 4.

6°) - Manocontact selon les revendications 1 et 2 caractérisé par le fait qu'après le préréglage en hauteur du barreau 13, le puits inférieur au-dessous de la vis est obturé par une cire ou un produit analogue.

0003188

Numéro de la demande

EP 79 40 0002

**Office européen des brevets**

## RAPPORT DE RECHERCHE EUROPEENNE

| Catégorie | Citation du document avec indication, en cas de besoin, des parties pertinentes | Revendication concernée |
|-----------|------------------------------------------------------------|----------|
| A | <u>FR - A - 2 353 801</u> (SAUNIER DUVAL) <br> * Page 6, lignes 1-15; figure 1 * <br><br> -- | 1 |
| A | <u>FR - A - 2 208 064</u> (WALTER BECK) <br> * Figure 1, page 1, lignes 10-15 * <br><br> -- | 1 |
| A | <u>DE - A - 2 006 658</u> (SAUNIER DUVAL) <br> * Figure 2, page 12, revendication 3 * <br> & FR - A - 2 034 159 <br><br> -- | 1 |
| A | <u>FR - A - 2 271 477</u> (C.A.M.J. THERY) <br> * Page 8, lignes 12-13 * <br><br> -- | 1 |
| A | <u>FR - A - 1 531 174</u> (THE BRYAN <u>DONKIN</u> CO.) <br> * Page 3, colonne de droite, lignes 4-19 * <br><br> -- | 1 |
| A | <u>FR - A - 1 314 004</u> (G. SANTUCCI) <br><br> ---- | 1 |

**DOCUMENTS CONSIDERES COMME PERTINENTS**

**CLASSEMENT DE LA DEMANDE (Int. Cl.²)**

F 23 N 1/02//
F 23 N 5/18
5/24
F 16 K 31/08
H 01 H 35/26
35/34

**DOMAINES TECHNIQUES RECHERCHES (Int. Cl.²)**

F 23 N 1/02
1/04
1/10
F 23 N 5/18
5/24
F 16 K 31/08
H 01 H 35/26
35/34

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|----------------------|-----------------------------------|-------------|
| La Haye | 02-04-1979 | VAN SCHOOR |

OEB Form 1503.1 06.78